# EUROPEAN PATENT APPLICATION

(11) **EP 1 382 671 A1**
(43) Date of publication of application: **21.01.2004**
(21) Application number: 02720556.6
(22) Date of filing: 22.04.2002
(51) Int. Cl.: C12N 1/00, C08J 11/18

(54) **METHOD OF DECOMPOSING UNSATURATED CARBOXYLIC ACID COPOLYMER**

(30) Priority: 25.04.2001 JP 2001127609; 18.01.2002 JP 2002009875
(71) Applicant: IDEMITSU PETROCHEMICAL CO., LTD., Tokyo 130-0015 (JP)
(72) Inventor: NISHIDA, Tomoaki, Shizuoka-shi, Shizuoka 422-8529 (JP); ITO, Shinji, Shunan-shi, Yamaguchi 745-8691 (JP); MATSUO, Shigeru, Shunan-shi, Yamaguchi 745-8691 (JP)
(74) Representative: Gille Hrabal Struck Neidlein Prop Roos
(86) International application number: PCT/JP2002/003992
(87) International publication number: WO 2002/088326

(57) **Abstract**

A method of decomposing an unsaturated carboxylic acid copolymer which comprises bonding to a molecular chain thereof a functional group having the property.of generating a free radical and then bringing a white-rot fungus or an enzyme excreted from a white-rot fungus into contact with the unsaturated carboxylic acid copolymer. The method enables an unsaturated carboxylic acid copolymer to be decomposed without adversely influencing the natural environment.

## Description

### TECHNICAL FIELD

The present invention relates to a method of decomposing an unsaturated carboxylic acid based copolymer. More particularly, it is concerned with a method of decomposing an unsaturated carboxylic acid based copolymer without adversely influencing the natural environment at the time of disposal treatment thereof.

### BACKGROUND ART

An unsaturated carboxylic acid based polymer such as acrylic acid based copolymer and a cross-linked compound therefrom are employed in broad fields including additives for a detergent builder and a muddy water composition for ground excavation; a water retention agent for soil; a water absorbing material such as paper diaper and the like. The detergent builder is employed as an assistant component for a surfactant for the purpose of enhancing the detergency of a synthetic detergent for fibers. There were used as the detergent builder in early days, sodium carbonate, sodium silicate, sodium borate and the like. However, since the above-cited species form water-insoluble precipitates when used along with hard water as cleaning water, sodium tripolyphosphate has come into use which is free from such a trouble as water-insoluble precipitates even when used along with hard water. Nevertheless, the sodium tripolyphosphate involves the problem of bringing about eutrophication of lakes, ponds and rivers. Such being the case, zeolite type A has come into use which exerts less adverse influence upon the natural environment. However since the zeolite type A is insufficient in the performance as a builder, an acrylic acid based polymer is used to compensate for the insufficient performance thereof.
The additive for a muddy water composition for ground excavation is used as an additive component for a muddy water composition which is pored into excavation places for the purpose of absorbing frictional heat generated at the time of ground excavation, conveying out excavation debris and scrap at the bottom of pit or tunnel above the ground, maintaining walls of pit or tunnel, or preventing
a stratum which is liable to crumble from crumbling or the like. In addition thereto, the additive is used as a water retention agent for soil intended for promoting the growth of plants that are planted for the purpose of afforesting dried soil. Moreover an unsaturated carboxylic acid based polymer is used as a coagulating agent in the case of subjecting excreta from livestock to solid-liquid separation in the industries of livestock and agriculture and besides, across-linked product from an unsaturated carboxylic acid based polymer is used as a fermentation aid of a compost.

In the case of disposing the treating materials composed, as a raw material, of the unsaturated carboxylic acid based polymer and cross-linked compound therefrom that have been spent in each of the above-mentioned fields, the materials are subjected to composting treatment and then are each disseminated in a farm land. However, the unsaturated carboxylic acid based copolymer and cross-linked compound therefrom as mentioned above involve the problem of remaining as such in the natural environment because of their being devoid of biodegradability. The paper diaper, which is subjected to an incineration treatment, involves the problem of causing damage to an incinerator owing to the alkaline property of incinerated ash.

Under such circumstances, there are made several proposals for the purpose of causing the above-mentioned unsaturated carboxylic acid based polymer to manifest biodegradability. For instance, there are proposed a method comprising imparting a high molecular weight to an oligomer of acrylic acid by means of an ester bond or an amide bond; a method comprising subjecting an oligomer of acrylic acid to graft polymerization with a biodegradable polymer such as sugar and polyvinyl alcohol; and a method comprising making use of polyaspartic acid. Nevertheless, any and all of the above-cited methods suffer from such troubles as insufficient performance as a detergent builder, intricate and troublesome production steps and the like.

There are also proposed as a biodegradable water absorbing resin, a starch based water absorbing resin, a hyaluronic acid based water absorbing resin and a polyglutamic acid based water absorbing resin {Japanese Patent Application Laid-Open No. 322358 /1994 (Heisei 6), Japanese Patent Application Laid-Open No. 300563 /1995 (Heisei 7) and Japanese Patent Application Laid-Open No. 251402 /1998 (Heisei 10), respectively) and the like. However, any and all of the above-cited methods suffer from such a trouble as inferior water absorbing properties and intricate and troublesome production steps and the like.

In such circumstances, there is desired the development of a method of treating by biodegradation process, an unsaturated carboxylic acid based polymer which method is excellent in the performance as water absorbing resin and detergent builder, easy to produce, and exemplified by acrylic acid polymer without adversely influencing the natural environment at the time of disposal treatment after being used.

Thus it is an object of the present invention to provide a method of decomposing an unsaturated carboxylic acid based copolymer which method is free from adverse influence upon the natural environment at the time of disposal treatment thereof.

### DISCLOSURE OF THE INVENTION

In order to solve the above-mentioned problems, intensive extensive research and investigation were made by the present inventors. As a result, it has been found that a white rot fungus or an enzyme excreted from a white rot fungus is capable of decomposing an unsaturated carboxylic acid based copolymer having a specific chemical constitution. The present invention has been accomplished on the basis of the aforesaid findings and information.

That is to say, the gist and summary of the present invention reside in
(I) a method of decomposing an unsaturated carboxylic acid based copolymer which comprises bringing a white rot fungus or an enzyme excreted from a white rot fungus into contact with either an unsaturated carboxylic acid based copolymer bearing a repeating unit (1) represented by the general formula [1] and a repeating unit (2) represented by the general formula [2] or a cross-linked compound of said copolymer 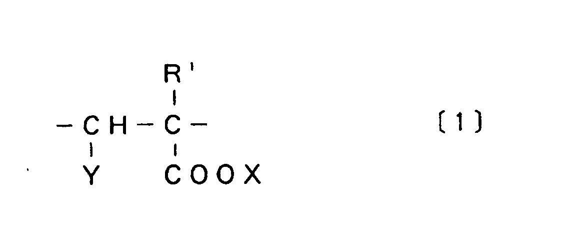 wherein R¹ indicates hydrogen atom or methyl group; X denotes hydrogen atom, an alkali metal atom or ammonium group; and Y stands for hydrogen atom, methyl group or -COOX, 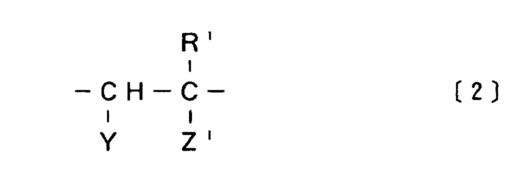 wherein R¹ and Y are each the same as R¹ and Y, respectively as defined in the general formula [1]; and Z¹ is a functional group having a property of generating a radical;
(II) The method of decomposing an unsaturated carboxylic acid based copolymer as set forth in the preceding item (I) wherein Z¹ which is a functional group in the general formula [2] is selected from the group consisting of the groups represented each by any of the general formulae [3] through [22]

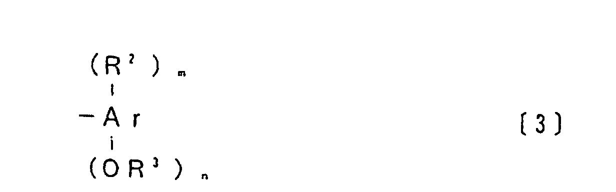

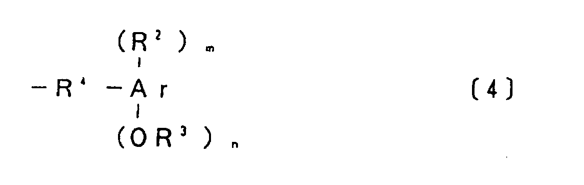

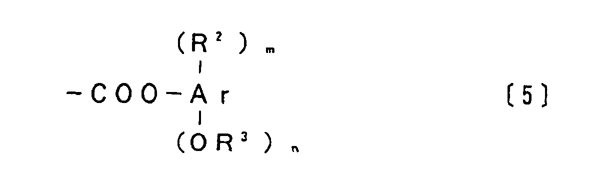

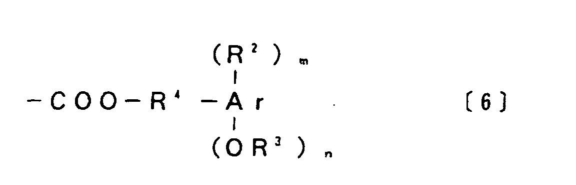

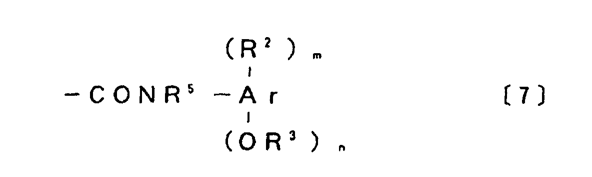

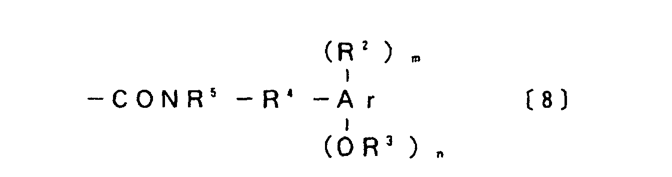

   - CHO [9]

   -R⁴ - CHO [10]

   - SH [11]

   - R⁴ - SH [12]

   - N = N - R⁶ [13]

   - R⁴ - N = N - R⁶ [14]

   - NH - NH - R⁶ [15]

   - R⁴ - NH - NH - R⁶ [16]

   - CN [17]

   - R⁴ - CN [18]

   - NH - R⁵ [19]

   - R⁴ -NH - R⁵ [20]

   - CONH - R⁵ [21]

   - R⁴ - CONH - R⁵ [22]

   wherein in the general formulae [3] to [22], Ar indicates an aromatic hydrocarbon group having 6 to 14 carbon atoms; R² denotes a hydrocarbon group having 1 to 10 carbon atoms, amino group, -COOX (X represents hydrogen atom, an alkali metal atom or ammonium group), -SO₃X (X represents hydrogen atom, an alkali metal atom or ammonium group), -CHO or -NO₂; R³ stands for hydrogen atom, an alkali metal atom or a hydrocarbon group having 1 to 8 carbon atoms; R⁴ indicates a bivalent hydrocarbon group having 1 to 10 carbon atoms; R⁵ denotes hydrogen atom, methyl group or ethyl group; R⁶ represents a hydrocarbon group having 1 to 10 carbon atoms; m stands for an integer from 0 to 5; and n stands for an integer from 0 to 5 with the proviso that m + n is an integer from 1 to 5;
(III) The method of decomposing an unsaturated carboxylic acid based copolymer as set forth in any of the preceding items ( I ) and (II) wherein the unsaturated carboxylic acid based copolymer comprises a repeating unit (1) represented by the general formula [23] 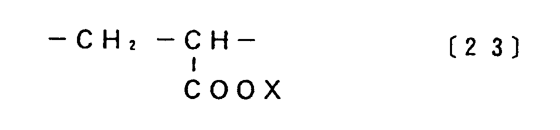 wherein X represents hydrogen atom, an alkali metal atom or ammonium group; and a repeating unit (2) represented by the general formula [24] 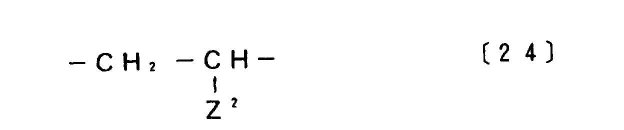 Wherein Z² represents a hydroxyphenylamide group, amide group or an aldehyde group, or by the general formula [25] 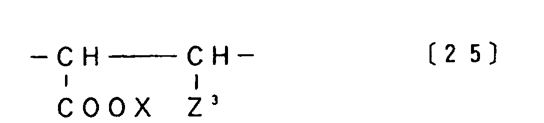 wherein X represents hydrogen atom, an alkali metal atom or ammonium group and Z³ stands for aminophenylamide group;
(IV) The method of decomposing an unsaturated carboxylic acid based copolymer as set forth in any of the preceding items ( I ) to (III) wherein the cross-linked compound of an unsaturated carboxylic acid based copolymer is a cross-linked compound which is obtained by reacting an unsaturated carboxylic acid based copolymer with a water-soluble compound bearing in its one molecule, at least two functional groups each capable of reacting with a carboxyl group;
(V) The method of decomposing an unsaturated carboxylic acid based copolymer as set forth in any of the preceding items ( I ) to (III) wherein the cross-linked compound of an unsaturated carboxylic acid based copolymer is a cross-linked compound which is obtained by reacting an unsaturated carboxylic acid based copolymer upon the polymerization of the unsaturated carboxylic acid, with a compound bearing at least two unsaturated groups in its one molecule;
(VI) The method of decomposing an unsaturated carboxylic acid based copolymer as set forth in any of the preceding items ( I ) to (V) wherein the white rot fungus is one or at least two fungi selected from the fungi belonging to the group consisting of Phanerochaete, Pleurotus, Trametes, Ceriporiopsis, Lentinula, Coriolus, Bjerokandera and Pycnoporus;
(VII) The method of decomposing an unsaturated carboxylic acid based copolymer as set forth in any of the preceding items ( I ) to (VI) wherein the white rot fungus is that belonging to Phanerochaete chrysosporium.

### BRIEF DESCRIPTION OF DRAWINGS

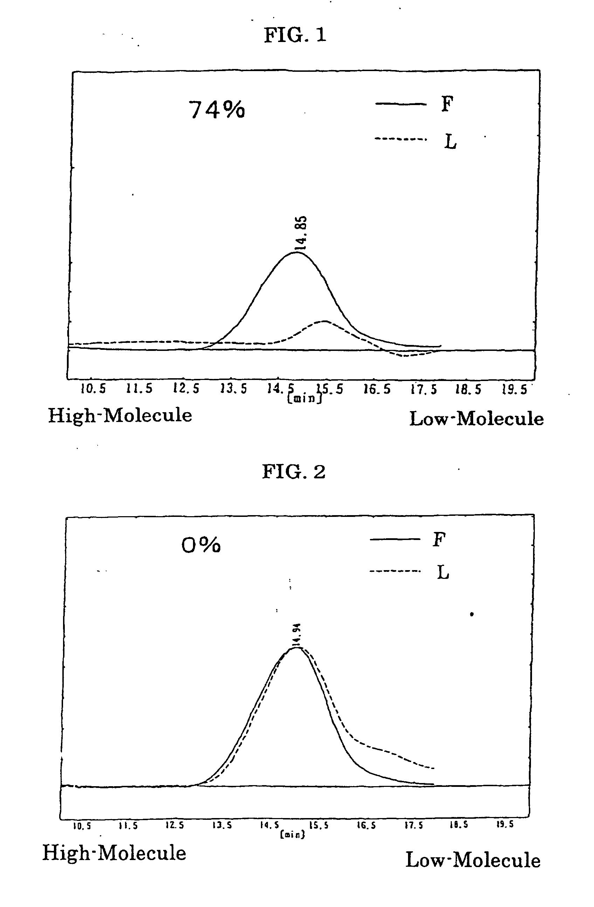

FIG. 1 is a chart showing the results of determination before and after the decomposition, of an unsaturated carboxylic acid copolymer by means of GPC method in Example 1, wherein the solid line F indicates the chart before decomposition, while the dotted line L denotes the chart after decomposition, and the figure at the left-hand top stands for decomposition efficiency;
FIG. 2 is a chart showing the results of determination before and after the decomposition, of polyacrylic acid by means of GPC method in Comparative Example 1, wherein the solid line F indicates the chart before decomposition, while the dotted line L denotes the chart after decomposition, and the figure at the left-hand top stands for decomposition efficiency;

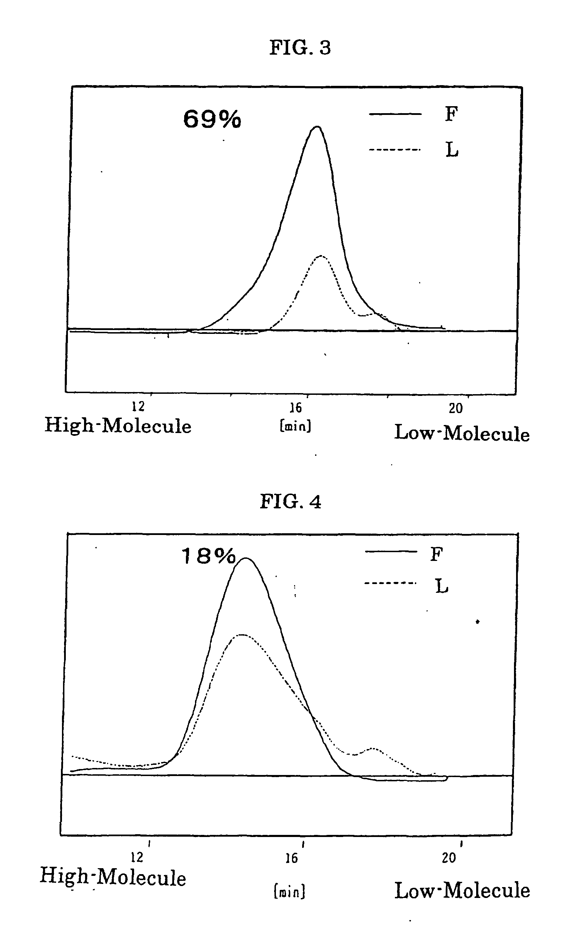

FIG. 3 is a chart showing the results of determination before and after the decomposition, of an unsaturated carboxylic acid copolymer by means of GPC method in Example 6, wherein the solid line F indicates the chart before decomposition, while the dotted line L denotes the chart after decomposition, and the figure at the left-hand top stands for decomposition efficiency; and
FIG. 4 is a chart showing the results of determination before and after the decomposition, of an acrylic acid - acrylamide copolymer by means of GPC method in Example 7, wherein the solid line F indicates the chart before decomposition, while the dotted line L denotes the chart after decomposition, and the figure at the left-hand top stands for decomposition efficiency.

### THE MOST PREFERRED EMBODIMENT TO CARRY OUT THE INVENTION

The present invention consists in a method of decomposing an unsaturated carboxylic acid based copolymer which comprises bringing a white rot fungus or an enzyme excreted from a white rot fungus into contact with either an unsaturated carboxylic acid based copolymer bearing a repeating unit (1) represented by the general formula [1] and a repeating unit (2) represented by the general formula [2] or a cross-linked compound of said copolymer.

The alkali metal atom represented by X in the aforesaid general formula [1] is exemplified by lithium atom, sodium atom and potassium atom. The aromatic hydrocarbon group having 6 to 14 carbon atoms represented by Ar in the aforesaid general formula [3] to [22] relating to a functional group Z' in the aforesaid general formula [2] is exemplified by phenylene group, biphenylene group, naphthylene group and anthrylene group. The hydrocarbon group having 1 to 10 carbon atoms represented by R² in the same is exemplified by methyl group, ethyl group, n-propyl group, isopropyl group, n-butyl group, isobutyl group, sec-butyl group, tert-butyl group, n-pentyl group, n-hexyl group, n-heptyl group, n-octyl group, n-nonyl group, n-decyl group, phenyl group, tolyl group, xylyl group, benzyl group, cyclopentyl group and cyclohexyl group. The hydrocarbon group having 1 to 8 carbon atoms represented by R³ in the same is exemplified by methyl group, ethyl group, n-propyl group, isopropyl group, n-butyl group, isobutyl group, sec-butyl group, tert-butyl group, n-pentyl group, n-hexyl group, n-heptyl group, n-octyl group, n-nonyl group, n-decyl group, phenyl group, tolyl group, xylyl group, benzyl group, cyclopentyl group and cyclohexyl group. The bivalent hydrocarbon group having 1 to 10 carbon atoms represented by R⁴ in the same is exemplified by methylene group, ethylene group, trimethylene group, tetramethylene group, pentamethylene group, hexamethylene group, heptamethylene group, octamethylene group, nonamethylene group, decamethylene group and phenylene group. The hydrocarbon group having 1 to 10 carbon atoms represented by R⁶ in the same is exemplified by the groups same as those having been exemplified in the above-mentioned R².

As the unsaturated carboxylic acid based copolymers which can be decomposed by the method according to the present invention, those that are produced each by any of various production processes are usable, and are exemplified by a copolymer which is obtained by copolymerizing one or at least two unsaturated compounds represented by the general formula [26] and one or at least two unsaturated compounds represented by the general formula [27] 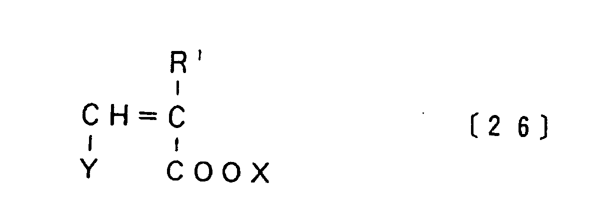 wherein R¹, X and Y are each same as R¹, X and Y, respectively in the foregoing general formula [1] 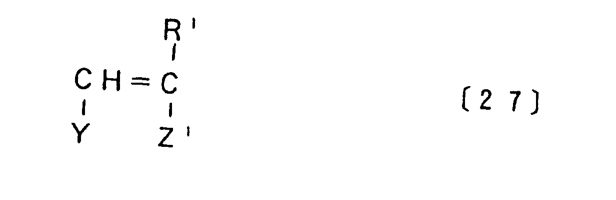 wherein R¹, X and Y are each same as R¹, X and Y, respectively in the foregoing general formula [2].

Examples of the unsaturated compounds represented by the above-mentioned general formula [26] include acrylic acid, methacrylic acid, maleic acid, fumaric acid and maleic anhydride. There are also usable an alkali metal salt and ammonium salt of any of the above-cited unsaturated compounds. Any of the unsaturated compounds may be used alone or in arbitrary combination with at least one other.

Examples of the unsaturated compounds represented by the above-mentioned general formula [27] include 3-carboxy-N-(4-aminophenyl)-acrylamide, 3-carboxy-N-(3-aminophenyl)-acrylamide, 3-carboxy-N-(2-aminophenyl)-acrylamide, 3-carboxy-N-(4-hydroxyphenyl)-acrylamide, 3-carboxy-N-(3-hydroxyphenyl)-acrylamide, 3-carboxy-N-(2-hydroxyphenyl)-acrylamide, acrolein, methacrolein, crotonaldehyde, 2-methyl-2-butenal, ethylene sulfide, allyl mercaptan, allyl cyanide, allylamine, acrylonitrile, acrylamide, methacrylonitrile, methacrylamide, acrylic hydrazide, 4-(phenylazo)benzyl acrylate, an alkali metal salt thereof and an ammonium salt thereof.

In addition, there are exemplified by a copolymer which is obtained by copolymerizing one or at least two unsaturated compounds represented by the general formula [26] and one or at least two aromatic compounds represented by the general formula [28]

(R¹)ₘ - Ar - (OR³)ₙ [28]

wherein R¹, Ar, R³, m and n are each same as R¹, Ar, R³, m and n, respectively in the foregoing general formulae [3] to [8].

Examples of the above-mentioned aromatic compounds represented by the general formula [28]include hydroquinone, resorcinol, p-methoxyphenol, 1,5-dihydroxynaphthalene, 2,6-dihydroxynaphthalene, dihydroxyanthraquinone, dihydroxybenzoic acid, dihydroxybenzaldehyde, 1,4-benzoquinone, dihydroxybenzenesulfonic acid, dihydroxybenzonitrile, dihydroxynitrobenzene, p-aminophenol, m-aminophenol, o-aminophenol, p-diaminobenzene, m-diaminobenzene, o-diaminobenzene, 2,5-dimethoxyaniline, 2,3-dimethoxyaniline, 2,4-dimethoxyaniline, 3,4-dimethoxyaniline, 3, 5-dimethoxyaniline, 2,5-dihydroxyaniline, 2, 3-dihydroxyaniline, 2,4-dihydroxyaniline, 3,4-dihydroxyaniline, 3,5-dihydroxyaniline, p-hydroxyaminophenol, m-hydroxyaminophenol, o-hydroxyaminophenol, 3-amino-4-hydroxybenzenesulfonic acid, 2-aminophenyl-4-sulfonic acid and 5-amino-2-hydroxybenzenesulfonic acid.

The above-mentioned unsaturated carboxylic acid based copolymers decomposable by the method according to the present invention may be not only the copolymer which is obtained by copolymerizing the unsaturated compound represented by the general formula [26] and the unsaturated compound represented by the general formula [27], but also a copolymer which is obtained by introducing a compound bearing a functional group such as a hydroxyl group and an amino group through condensation reaction in the carboxyl group of a homopolymer of the unsaturated compound represented by the general formula [26].

As described hereinbefore, the unsaturated carboxylic acid based copolymer has both the repeating unit (1) represented by the general formula [1] and the repeating unit (2) represented by the general formula [2]. In regard to the content ratio of the repeating unit (1) to the repeating unit (2), the latter is contained preferably by at least 0. 5 mol%, since the content thereof being less than 0.5 mol% will leads to deterioration in its biodegradability.

Moreover, the unsaturated carboxylic acid copolymer to be used in the method according to the present invention may comprise not only the basic structural unit constituted of the repeating units (1) and (2), but also a repeating unit other than the foregoing, for instance, a repeating unit derived from one or at least two compounds such as acrylic ester exemplified by vinyl acetate, methyl acrylate, ethyl acrylate, propyl acrylate, etc. and methacrylic ester exemplified by methyl methacrylate, ethyl methacrylate, etc. It is desirable to set the content ratio of the repeating unit other than the repeating units (1) and (2) on at most 30 mol% so that the hydrophilicity of the unsaturated carboxylic acid copolymer is not deteriorated thereby.

Among the unsaturated carboxylic acid copolymers that are used in the method according to the present invention and have various structural units, there is preferably usable the copolymer in which the repeating unit (1) has the chemical constitution as represented by the above-mentioned general formula [23] and besides, the repeating unit (2) has the chemical constitution as represented by the above-mentioned general formula [24] or [25] because of its easy availability and the manufacturing cost suppressible to a lower level.

As the cross-linked compound of the unsaturated carboxylic acid based copolymer bearing both the repeating unit (1) and the repeating unit (2) as described hereinbefore, there is usable the cross-linked compound which is obtained by reacting a water-soluble compound that has in its one molecule, at least two functional groups each capable of reacting with a carboxyl group with the above-mentioned unsaturated carboxylic acid based copolymer. Examples of the compounds having such chemical constitution include ethylene glycol diglycidyl ether, glycerol triglycidyl ether, polyethylene glycol diglycidyl ether, dipropylene glycol diglycidyl ether, diethylene glycol, triethylene glycol,polyethylene glycol, glycerol, polyglycerol, propylene glycol, ethylenediamine, butanediamine, diethanolamine, triethanolamine, polyoxypropylene, polyvinyl alcohol, pentaerithritol, sorbite, sorbitan, glucose, mannite and mannitan. At the time of polymerization of the above-mentioned unsaturated carboxylic acid, there is also usable a cross-linked compound which is obtained by reacting a compound having at least two unsaturated groups in its one molecule, with the unsaturated carboxylic acid. Examples of the compound just mentioned include N,N-methylenebisacrylamide, ethylene glycol dimethacrylate, polyethylene glycol diacrylate and trimethylolpropane triacrylate.

With regard to the unsaturated carboxylic acid copolymer and cross-linked compound thereof that are decomposable by the method according to the present invention, since the repeating unit therein comprises the above-described general formulae [1] and [2] and in particular, the functional group represented by Z' in the general formula [2] possesses the property of generating a radical, for instance, by an enzyme excreted from a white rot fungus, the decomposition of the copolymer or the compound comes to progress and expand by the scission of the molecules thereof accompanying radical generation upon being brought into contact with an enzyme excreted from a white rot fungus. When the above-mentioned enzyme excreted from a white rot fungus is brought into contact with viable microorganism of the white rot fungus, it is possible to allow an enzyme excreted from the microorganism to act as such on the unsaturated carboxylic acid copolymer or cross-linked compound. In the case where the enzyme excreted from a white rot fungus is relied upon, it is possible to use secreted enzyme which is obtained by separating from a culture broth for white rot fungi by means of an ion exchange resin or the like.

The usable white rot fungus can be selected from a variety of those in the present method, and is preferably one or at least two fungi selected from the fungi belonging to the group consisting of Phanerochaete, Pleurotus, Trametes, Ceriporiopsis, Lentinula, Coriolus, Bjerokandera and Pycnoporus, of which the white rot fungus belonging to Phanerochaete chrysosporium is preferably used in particular. There is preferably used cultured white rot fungus which is collected form soil or putrefied wood and thereafter is cultured by the use of a culture medium usually being in service such as a malt agar culture medium. The culturing conditions in this case need only to be regulated to a culturing temperature in the range of 25 to 35°C and a pH of a culture broth in the range of 4.5 to 5.5.

In the case of decomposing the unsaturated carboxylic acid copolymer or cross-linked compound thereof to be subjected to a disposal treatment after in service in a variety of fields by being brought into contact with the above-described white rot fungus or an enzyme excreted from the white rot fungus, there may be adopted a method which comprises allowing a culture broth of the white rot fungus or a solution containing an enzyme excreted from the white rot fungus to adhere to a molded article of the unsaturated carboxylic acid copolymer or cross-linked compound thereof, or a method which comprises embedding a molded article of the unsaturated carboxylic acid copolymer or cross-linked compound thereof into a compost or soil each allowing a white rot fungus to exist.

In what follows, the present invention will be described in more detail with reference to working examples.

### Example 1

### (1) Preparation of an unsaturated carboxylic acid copolymer··· ···

In a 100 milliliter (mL) separable flask equipped with a stirrer, a thermocouple and an oil-water separator were placed 5 g of polyacrylic acid having a weight average molecular weight of 75, 000, 1. 52 g of p-aminophenol and 20 mL of N-methylpyrrolidone as a solvent with stirring. Subsequently the flask was immersed in an oil bath maintained at 160°C. When the temperature in the reaction system was brought to a constant level, the content therein was incorporated with 10 mg of sulfuric acid as the catalyst and 50 mL of toluene as the solvent to proceed with reaction for a period of 5 hours.

After the completion of the reaction, 50 mL of water was added in the flask, and the content therein was regulated to pH 7 by means of sodium hydroxide and purified by reprecipitation from acetone. Then the precipitate thus formed was lyophilized to obtain an unsaturated carboxylic acid copolymer.

Subsequently, a measurement was made of the weight average molecular weight of the unsaturated carboxylic acid copolymer thus obtained by means of gel permeation chromatography with the result that it was 82, 000. In addition, it was confirmed that the unsaturated carboxylic acid copolymer was composed of the repeating units as indicated hereunder form the result of a measurement of ¹H-NMR (instrument manufactured by JEOL under the trade name "GX-270").

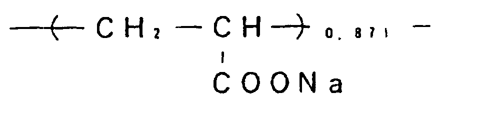

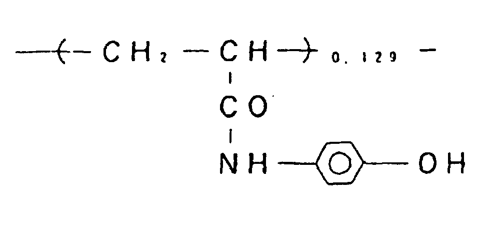

### (2) Decomposition of unsaturated carboxylic acid copolymer by white rot fungus ··· ···

Culture medium components as the culture broth the chemical compositon of which is given in Table 1 were dissolved in 1000 mL of sodium tartrate buffer solution having a concentration of 20 mmol, and the culture broth was adjusted to pH 4.5.

**Table 1**

| Culture medium components | Amount Used |
|---|---|
| Ammonium tartrate | 0.2 g |
| Glucose | 10.0 g |
| Polyoxyethylene sorbitan | |
| monooleate | 0.5 g |
| KH₂PO₄ | 2. 0 g |
| MgSO₄ · H₂O | 0.5 g |
| CaCl₂ · H₂O | 0.1 g |
| Thiamine hydrochloride | 1.0 mg |
| Sodium nitroacetate | 1.5 mg |
| MnSO₄ · H₂O | 0.5 mg |
| NaCl | 1. 0 mg |
| FeSO₄ · 7H₂O | 0.1 mg |
| ZnSO₄ | 0.1 mg |

To the resultant 100 mL of the culture broth were added 10 mg of the unsaturated carboxylic acid copolymer which had been obtained in the preceding item (1) and then 5 mL of fungi liquid of Phanerochaete chrysosporium which had been previously cultured, and the resultant mixture was shaked at 30°C and 150 rpm for a period of one week to culture the same.

After the completion of the culture, the fungi were removed from the culture broth by the use of fibrous filter paper, and the culture broth was sterilized in an autoclave. Subsequently the culture broth after filtration was lyophilized and a measurement was made of the decomposition efficiency of the unsaturated carboxylic acid copolymer through GPC method by regulating the concentration. The results of measurement are given in Table 2 and FIG. 1.

### Comparative Example 1

The procedure in Example 1 was repeated to prepare an unsaturated carboxylic acid based polymer and decompose the same except that polyacrylic acid was used in place of the unsaturated carboxylic acid copolymer. The results of measurement are given in Table 2 and FIG. 2.

**Table 2**

| | Biodegradation efficiency (%) |
|---|---|
| Example 1 | 74 |
| Comparative Example 1 | 0 |

### Example 2

### (1) Preparation of an unsaturated carboxylic acid copolymer··· ···

In a 100 mL separable flask equipped with a stirrer, a thermocouple and a reflux condenser were placed 6.48 g of acrylic acid, 0.62 g of acrolein and 63. 9 g of water with stirring for uniformizing the reaction system. Subsequently the flask was immersed in an oil bath maintained at 60°C. When the temperature in the reaction system was brought to a constant level, the content therein was incorporated with 0.81 g of 2, 2'-azobis(2-aminodipropane) dihydrochloride as the polymerization initiator to proceed with polymerization reaction for a period of 2 hours.

After the completion of the reaction, the content therein was regulated to pH 7, and purified by reprecipitation from acetone. Then the precipitate thus formed was lyophilized to obtain an unsaturated carboxylic acid copolymer.

Subsequently, a measurement was made of the weight average molecular weight of the unsaturated carboxylic acid copolymer thus obtained with the result that it was 361, 000. In addition, it was confirmed that the unsaturated carboxylic acid copolymer was composed of the repeating units as indicated hereunder form the result of a measurement of ¹H-NMR.

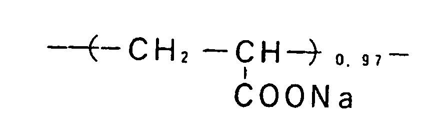

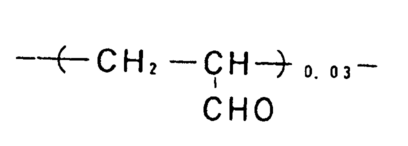

### (2) Decomposition of unsaturated carboxylic acid copolymer by manganese peroxidase··· ···

The unsaturated carboxylic acid copolymer which had been obtained in the preceding item (1) in an amount of 10 mg was added to 100 mL of a reaction liquid the chemical composition of which was given in Table 3, and the resultant mixture was shakingly treated at 30°C and 150 rpm for 24 hours. Subsequently, a measurement was made of the weight average molecular weight of the unsaturated carboxylic acid copolymer thus treated to confirm whether or not it was decomposed. The results of measurement are given in Table 4.

**Table 3**

| Component | Concentration |
|---|---|
| Mn²⁺ ion | 0.2 mmol |
| Glucose | 2.5 mmol |
| Polyoxyethylene sorbitan monooleate | 0.1% |
| Glucose oxidase | 0.2 unit |
| Manganese peroxidase | 0.2 unit |
| Malonic acid buffer solution of pH 4.5 with 50 mmol concentration···100 milliliter | |

### Example 3

### (1) Preparation of an unsaturated carboxylic acid copolymer··· ···

The procedure in Example 1 (1) was repeated to prepare an unsaturated carboxylic acid copolymer except that p-aminophenol was added in an amount of 0.61 g in place of 1. 52 g. Subsequently, a measurement was made of the weight average molecular weight of the unsaturated carboxylic acid copolymer thus obtained with the result that it was 80,000. In addition, it was confirmed that the unsaturated carboxylic acid copolymer was composed of the repeating units as indicated hereunder form the result of a measurement of ¹H-NMR.

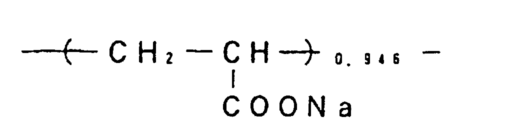

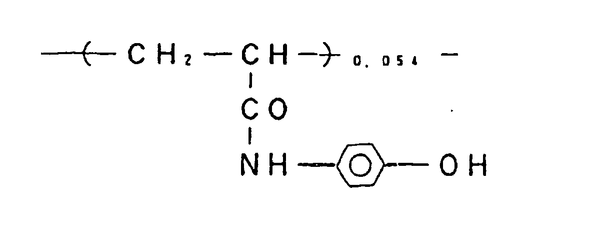

### (2) Decomposition of unsaturated carboxylic acid copolymer by manganese peroxidase··· ···

The procedure in Example 2 (2) was repeated to decompose the unsaturated carboxylic acid copolymer which had been obtained in the preceding item (1) by the use of manganese peroxidase. The results of measurement are given in Table 4.

### Example 4

### (1) Preparation of 3-carboxy-N-(4-aminophenyl)acrylamide···

In a one liter short neck Kjeldahl flask were placed 10.9 g of 4-diaminobenzene and further 550 mL of acetone to dissolve it. Subsequently a solution of 9.8 g of maleic anhydride dissolved in 50 mL of acetone was gradually added in the flask to proceed with reaction at 20°C for 14 hours.

After the completion of the reaction, a deposit was filtered, washed with water and thereafter dried under reduced pressure to obtain 3-carboxy-N-(4-aminophenyl)acrylamide at a yield of 60%.

### (2) Preparation of an unsaturated carboxylic acid copolymer··· ···

In a 100 mL separable flask equipped with a stirrer, a thermocouple, a reflux condenser and a raw material feed chemical pump were placed 7.2 g of acrylic acid, 4.0 g of sodium hydroxide, 3.0 g of 3-carboxy-N-(4-aminophenyl)acrylamide, 11.4 g of water and 7.8 g of ferric chloride tetrahydrate as the catalyst. Subsequently the flask was immersed in an oil bath maintained at 100°C. Then 2. 8 g of hydrogen peroxide having a concentration of 60% by mass was added dropwise in the flask over a period of 4 hours by means of a chemical pump to further proceed with reaction for one hour.

After the completion of the reaction, the content therein was purified by reprecipitation from acetone. Then the precipitate thus formed was lyophilized to obtain an unsaturated carboxylic acid copolymer. Subsequently, a measurement was made of the weight average molecular weight of the unsaturated carboxylic acid copolymer thus obtained with the result that it was 81, 000. In addition, it was confirmed that the unsaturated carboxylic acid copolymer was composed of the repeating units as indicated hereunder form the result of a measurement of ¹H-NMR

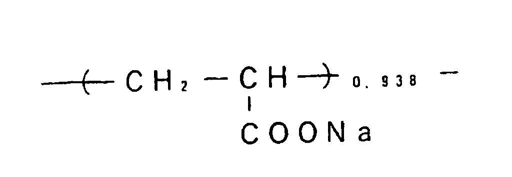

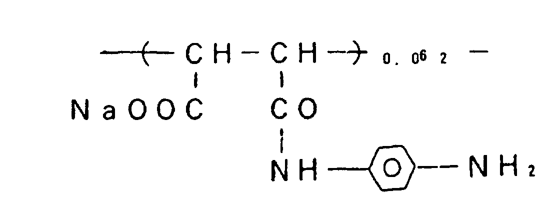

### (3) Decomposition of unsaturated carboxylic acid copolymer by manganese peroxidase ··· ···

The procedure in Example 2 (2) was repeated to decompose the unsaturated carboxylic acid copolymer which had been obtained in the preceding item (2) by the use of manganese peroxidase. The results of measurement are given in Table 4.

### Comparative Example 2

The procedure in Example 2 was repeated to prepare an unsaturated carboxylic acid based polymer and decompose the same except that polyacrylic acid was used in place of the unsaturated carboxylic acid copolymer. The results of measurement are given in Table 4.

**Table 4**

| | Weight average molecular weight | |
|---|---|---|
| Example or Comparative Example | before Decomposition | after Decomposition |
| Example 2 | 361, 000 | 225, 000 |
| Example 3 | 80, 000 | 59, 000 |
| Example 4 | 81, 000 | 58, 000 |
| Comparative Example 2 | 75,000 | 75,000 |

### Example 5

### (1) Preparation of an unsaturated carboxylic acid copolymer··· ···

The procedure in Example 1 (1) was repeated to prepare an unsaturated carboxylic acid copolymer except that there were used 5 g of polyacrylic acid having a weight average molecular weight of 1,700,000, 0.76 g of p-aminophenol and 60 mL of N-methylpyrrolidone as the solvent, and that the reaction time was set on 7 hours.

Subsequently, a measurement was made of the weight average molecular weight of the unsaturated carboxylic acid copolymer thus obtained with the result that it was 2,918,000. In addition, it was confirmed that the unsaturated carboxylic acid copolymer was composed of the repeating units as indicated hereunder form the result of a measurement of ¹H-NMR.

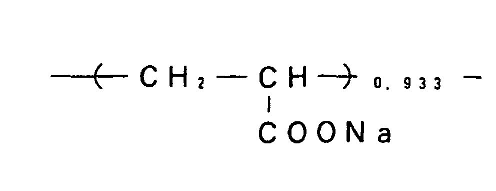

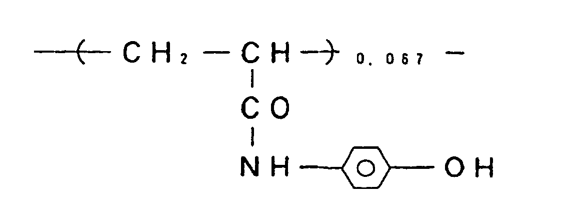

### (2) Preparation of cross-linked compound of the unsaturated carboxylic acid copolymer···

In a 100 mL separable flask were placed 5. 0 g of the unsaturated carboxylic acid copolymer which had been obtained in the preceding item (1), 25 mg of ethylene glycol glycidyl ether as the cross-linking agent and 20 mL of water to uniformly dissolve each of the components. Subsequently the flask was immersed in an oil bath maintained at 70°C to proceed with reaction for 2 hours.

After the completion of the reaction, the content therein was lyophilized to obtain a cross-linked compound of the unsaturated carboxylic acid copolymer.

### (3) Decomposition of the cross-linked compound of the unsaturated carboxylic acid copolymer by manganese peroxidase··· ···

The cross-linked compound of the unsaturated carboxylic acid copolymer which had been obtained in the preceding item (2) in an amount of 50 mg was added to 100 mL of the reaction liquid the chemical composition of which was given in Table 3 and same as in Example 2, and the resultant mixture was shakingly treated at 30°C and 150 rpm for 24 hours.

Subsequently, the product thus treated was filtered with a glass filter, and the filtered cake was washed and dried. Then a measurement was made of the mass of the cross-linked compound of the unsaturated carboxylic acid copolymer which compound was left on the glass filter to calculate the recovery rate of the cross-linked compound not decomposed by manganese peroxidase. The results of measurement are given in Table 6.

### Comparative Example 3

The cross-linked compound of the unsaturated carboxylic acid copolymer which compound had been obtained in Example 5 (2) in an amount of 50 mg was added to 100 mL of a reaction liquid the chemical composition of which was given in Table 5, and which was free from manganese peroxidase, and the resultant mixture was shakingly treated at 30°C and 150 rpm for 24 hours. Subsequently in the same manner as in Example 5 (3), the recovery rate of the cross-linked compound was calculated. The results of measurement are given in Table 6.

**Table 5**

| Component | Concentration |
|---|---|
| Mn²⁺ ion | 0.2 mmol |
| Glucose | 2.5 mmol |
| Polyoxyethylene sorbitan monooleate | 0.1% |
| Glucose oxidase | 0.2 unit |
| Malonic acid buffer solution of pH 4.5 with 50 mmol concentration···100 milliliter | |

**Table 6**

| | Recovery rate (%) |
|---|---|
| Example 5 | 59 |
| Comparative Example 3 | 84 |

### Example 6

### (1) Preparation of an unsaturated carboxylic acid copolymer··· ···

In a 100 mL separable flask equipped with a stirrer, a thermocouple and a reflux condenser were placed 11.52 g of acrylic acid, 2.24 g of acrolein, 5.1 g of sodium hydroxide and water so that the concentration of the solutes was made to be 20% by mass. Then the resultant mixture was stirred for uniformizing the reaction system. Subsequently the flask was immersed in an oil bath maintained at 50°C. When the temperature in the reaction system was brought to a constant level, the content therein was incorporated with 1.62 g of 2,2'-azobis(2-aminodipropane) dihydrochloride as the polymerization initiator to proceed with polymerization reaction for 3 hours.

After the completion of the reaction, the reaction liquid was purified by means of dialysis. The product thus formed was lyophilized to obtain an unsaturated carboxylic acid copolymer. Subsequently, a measurement was made of the weight average molecular weight of the unsaturated carboxylic acid copolymer thus obtained with the result that it was 110,000. In addition, it was confirmed that the unsaturated carboxylic acid copolymer had a content of structural unit derived form acrolein therein being 7.7 mol % from the result of a measurement of ¹H-NMR.

### (2) Decomposition of unsaturated carboxylic acid copolymer by white rot fungs··· ···

The procedure in Example 1 (2) was repeated to decompose the unsaturated carboxylic acid copolymer which had been obtained in the preceding item (1) by the use of manganese peroxidase. The results of measurement are given in FIG. 3. The decomposition efficiency was 69%.

### Example 7

The procedure in Example 1 (2) was repeated to decompose an unsaturated carboxylic acid polymer except that use was made of acrylic acid - acrylamide copolymer (acrylamide unit content of 18.8 mol%, weight average molecular weight of 1,268,000, manufactured by Aldrich Co., Ltd.)

The measurement results of decomposition efficiency of the unsaturated carboxylic acid polymer by means of GPC are given in FIG. 4 with the result that it was 18%.

### INDUSTRIAL APPLICABILITY

According to the present invention, it is made possible to decompose the unsaturated carboxylic acid based copolymer without adversely influencing the natural environment.

## Claims

1. A method of decomposing an unsaturated carboxylic acid based copolymer which comprises bringing a white rot fungus or an enzyme excreted from a white rot fungus into contact with either an unsaturated carboxylic acid based copolymer bearing a repeating unit (1) represented by the general formula [1] and a repeating unit (2) represented by the general formula [2] or a cross-linked compound of said copolymer 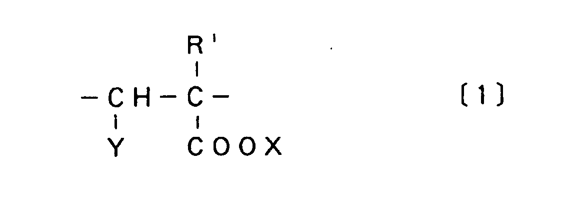 wherein R' indicates hydrogen atom or methyl group; X denotes hydrogen atom, an alkali metal atom or ammonium group; and Y stands for hydrogen atom, methyl group or -COOX, 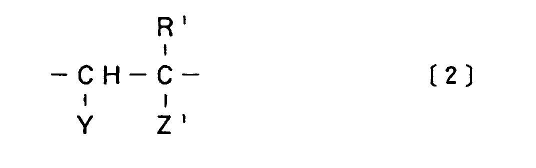 wherein R' and Y are each the same as R' and Y, respectively as defined in the general formula [1]; and Z' is a functional group having a property of generating a radical.

2. The method of decomposing an unsaturated carboxylic acid based copolymer according to Claim 1 wherein Z' which is a functional group in the general formula [2] is selected from the group consisting of the groups represented each by any of the general formulae [3] through [22] 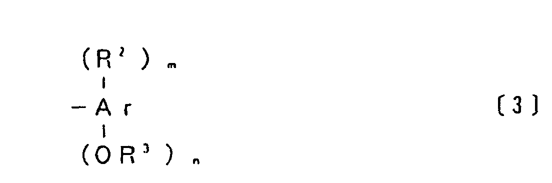 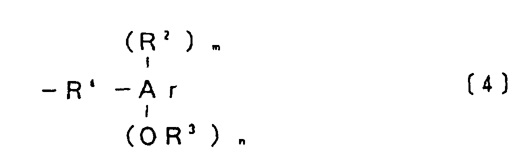 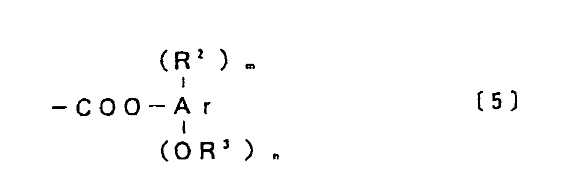 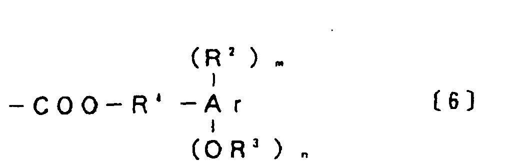 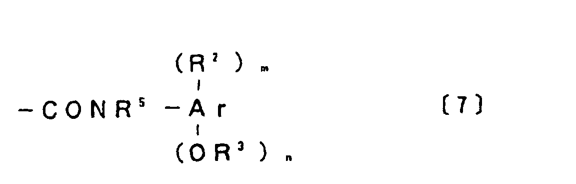 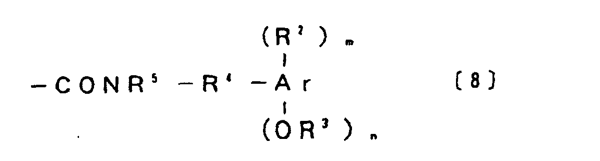
- CHO [9]
-R⁴ - CHO [10]
- SH [11]
- R⁴ - SH [12]
- N = N - R⁶ [13]
- R⁴ - N = N - R⁶ [14]
- NH - NH - R⁶ [15]
- R⁴ - NH - NH - R⁶ [16]
- CN [17]
- R⁴ - CN [18]
- NH - R⁵ [19]
- R⁴ -NH - R⁵ [20]
- CONH - R⁵ [21]
- R⁴ - CONH - R⁵ [22]
wherein in the general formulae [3] to [22], Ar indicates an aromatic hydrocarbon group having 6 to 14 carbon atoms; R² denotes a hydrocarbon group having 1 to 10 carbon atoms, amino group, -COOX (X represents hydrogen atom, an alkali metal atom or ammonium group), -SO₃ X (X represents hydrogen atom, an alkali metal atom or ammonium group), -CHO or -NO₂; R³ stands for hydrogen atom, an alkali metal atom or a hydrocarbon group having 1 to 8 carbon atoms ; R⁴ indicates a bivalent hydrocarbon group having 1 to 10 carbon atoms; R⁵ denotes hydrogen atom, methyl group or ethyl group; R⁶ represents a hydrocarbon group having 1 to 10 carbon atoms; m stands for an integer from 0 to 5; and n stands for an integer from 0 to 5 with the proviso that m + n is an integer from 1 to 5.

3. The method of decomposing an unsaturated carboxylic acid based copolymer according to any of Claims 1 and 2 wherein the unsaturated carboxylic acid based copolymer comprises a repeating unit (1) represented by the general formula [23] 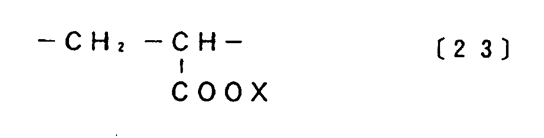 wherein X represents hydrogen atom, an alkali metal atom or ammonium group; and a repeating unit (2) represented by the general formula [24] 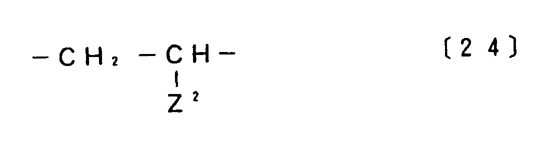 wherein Z² represents a hydroxyphenylamide group, amide group or an aldehyde group, or by the general formula [25] 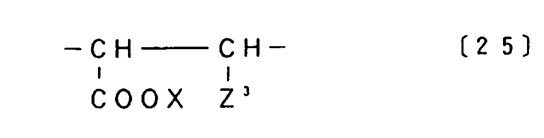 wherein X represents hydrogen atom, an alkali metal atom or ammonium group and Z³ stands for aminophenylamide group.

4. The method of decomposing an unsaturated carboxylic acid based copolymer according to any of Claims 1 to 3 wherein the cross-linked compound of an unsaturated carboxylic acid based copolymer is a cross-linked compound which is obtained by reacting an unsaturated carboxylic acid based copolymer with a water-soluble compound bearing in its one molecule, at least two functional groups each capable of reacting with a carboxyl group.

5. The method of decomposing an unsaturated carboxylic acid based copolymer according to any of Claims 1 to 3 wherein the cross-linked compound of an unsaturated carboxylic acid based copolymer is a cross-linked compound which is obtained by reacting an unsaturated carboxylic acid based copolymer upon the polymerization of the unsaturated carboxylic acid, with a compound bearing at least two unsaturated groups in its one molecule.

6. The method of decomposing an unsaturated carboxylic acid based copolymer according to any of Claims 1 to 5 wherein the white rot fungus is one or at least two fungi selected from the fungi belonging to the group consisting of Phanerochaete, Pleurotus, Trametes, Ceriporiopsis, Lentinula, Coriolus, Bjerokandera and Pycnoporus.

7. The method of decomposing an unsaturated carboxylic acid based copolymer according to any of Claims 1 to 6 wherein the white rot fungus is that belonging to Phanerochaete chrysosporium.
